# EUROPÄISCHE PATENTANMELDUNG

(11) **EP 4 015 472 A1**
(43) Veröffentlichungstag der Anmeldung: **22.06.2022**
(21) Anmeldenummer: 20214318.6
(22) Anmeldetag: 15.12.2020
(51) Int. Cl.: C03B 23/09, C03B 23/045, B65D 1/00

(54) **EINRICHTUNG, VORRICHTUNG UND VERFAHREN ZUR FORMUNG DER MÜNDUNG EINES HOHLKÖRPERFÖRMIGEN VORPRODUKTES AUS GLAS**

(71) Anmelder: SCHOTT AG, 55122 Mainz (DE)
(72) Erfinder: Jud, Xaver, 9217 Neukirch a.d. Thur (CH); Oberhänsli, Roman, 9000 St. Gallen (CH); Kummer, Hanspeter, 79379 Müllheim (DE)
(74) Vertreter: Ullrich & Naumann PartG mbB

(57) **Zusammenfassung**

Eine Einrichtung zur Formung einer Innenwandung der Mündung (2) eines hohlkörperförmigen Vorproduktes (4) aus Glas, insbesondere zur Herstellung eines pharmazeutischen Glasfläschchens (1), mit einem Dorn (8) zum Einführen in die Mündung (2) des Vorproduktes (4) entlang einer ersten Richtung (9) und einer Halterung (10), wobei der Dorn (8) an der Halterung (10) angeordnet ist, ist dadurch gekennzeichnet, dass die Halterung (10) ein Grundelement (11) aufweist und dass der Dorn (8) gegenüber dem Grundelement (11) entlang einer zweiten Richtung (12) bewegbar ist. Des Weiteren sind eine Vorrichtung und ein Verfahren zur Formung eines solchen Vorproduktes (4) sowie eine Mehrzahl von pharmazeutischen Glasfläschchen (1) beschrieben.

## Beschreibung

Die Erfindung betrifft eine Einrichtung zur Formung einer Innenwandung der Mündung eines hohlkörperförmigen Vorproduktes aus Glas, insbesondere zur Herstellung eines pharmazeutischen Glasfläschchens, mit einem Dorn zum Einführen in die Mündung des Vorproduktes entlang einer ersten Richtung und einer Halterung, wobei der Dorn an der Halterung angeordnet ist.

Des Weiteren betrifft die Erfindung eine Vorrichtung zur Bearbeitung eines hohlkörperförmigen Vorproduktes aus Glas, insbesondere zur Herstellung eines pharmazeutischen Glasfläschchens, mit mindestens einem Haltefutter zum Einspannen des Vorproduktes, einer Erhitzungseinrichtung und einer Außenformeinrichtung zur Formung einer Außenwandung der Mündung des Vorproduktes.

Des Weiteren betrifft die Erfindung ein Verfahren zur Formung der Mündung eines hohlkörperförmigen Vorproduktes aus Glas, insbesondere eines pharmazeutischen Glasfläschchens, mit einer Einrichtung.

Schließlich betrifft die Erfindung eine Mehrzahl von pharmazeutischen Glasfläschchen.

Die hier beschriebene Lehre betrifft insbesondere die Herstellung von pharmazeutischen Glasfläschchen. Ein wesentlicher Bearbeitungsschritt bei der Erzeugung der Glasfläschchen stellt dabei die Mündungs-Formung dar. Verfahren und Vorrichtungen zur Mündungs-Formung sind beispielsweise in der DE 10 2015 111 993 A1 sowie in der DE 10 2015 117 422 A1 beschrieben.

Hierzu werden üblicherweise Glasrohre, die den Produktanforderungen entsprechende Durchmesser aufweisen und somit geeignete Vorprodukte aus Glas darstellen, in Haltefuttern vertikal eingespannt. Die Haltefutter rotieren mit einer bestimmten Drehzahl und sind kreisförmig auf einem Teller befestigt. Unterhalb des Tellers mit den Haltefuttern sind auf fixen Positionen Bearbeitungsstationen angeordnet, die verschiedene Funktionen ausführen. Der Teller mit den Haltefuttern indexiert in einer Drehbewegung von einer Bearbeitungsstation zur nächsten. Für die Bearbeitung bleibt der Teller mit den Haltefuttern für einen definierten Zeitraum stehen. Jedes dieser Haltefutter kommt also durch das Indexieren des Tellers immer wieder an denselben Bearbeitungsstationen vorbei, so auch an einem Formsystem für die Mündungs-formung. Das genaue Positionieren der einzelnen Haltefutter auf dem Teilkreis radial und tangential ist maschinenbautechnisch mit erheblichen Problemen verbunden. Maschinenherstellerseitig liegen die Lagetoleranzen daher bei ca. ±0.2 mm bezogen auf ein Referenzfutter.

Wenn nun ein in einem Haltefutter eingespanntes Glasrohr zum Formsystem indexiert wird, fährt ein Dorn (Stachel) in das Glasrohr ein. Dieser Dorn hat einen den Abmessungen des Produktes entsprechenden Durchmesser. Durch Formrollen, die von außen zum Glasrohr bewegt werden, wird das im Mündungsbereich aufgewärmte, weiche Glasrohr über Federkraft zum Dorn gedrückt. Dabei rotiert das Glasrohr durch das angetriebene Haltefutter. Dadurch entsteht der innere Mündungsdurchmesser. Im besten Fall entspricht der innere Mündungsdurchmesser am Glasfläschchen dem Durchmesser des Dorns, nämlich genau dann, wenn die Mittelachse des Dorns mit der Mittelachse des rotierenden Glasrohres fluchtet.

Durch die Lagetoleranzen der Haltefutter, die auf dem Teller montiert sind, kommt es zu Abweichungen der Mittelachse des Dorns von der Mittelachse des Glasfläschchens. Dadurch wird der Mündungsinnendurchmesser unterschiedlich groß. Ein variierender Mündungsinnendurchmesser führt zu einer Variation bei dem Mündungsaußendurchmesser, da die von außen drückenden Formrollen üblicherweise lediglich mit einer Federkraft beaufschlagt werden.

Insgesamt besteht bei den aus dem Stand der Technik bekannten Vorrichtungen und Verfahren zur Formung der Mündung eines pharmazeutischen Glasfläschchens daher das Problem, dass die Mündung der Glasfläschchen relativ große Toleranzen aufweist. Da entsprechende Glasfläschchen regelmäßig zur Aufbewahrung von Injektionspräparaten dienen, haben sie jedoch geringstmögliche Abweichungen von dem definierten Sollwert einzuhalten. Eine Abweichung von dem Sollwert kann dazu führen, dass der Crimp undicht auf dem Behälter sitzt, so dass der Behälter nicht ausreichend verschlossen ist, d.h. die sog. "container closure integrity (CCI)" ist nicht gewährleistet. Somit kann es zu Verunreinigungen, einem Auslaufen oder einem vorzeitigen Verfall des pharmazeutischen Inhalts kommen.

Der vorliegenden Erfindung liegt daher die Aufgabe zugrunde, die Vorrichtungen und Verfahren der eingangs genannten Art derart auszugestalten und weiterzubilden, dass mit konstruktiv einfachen Mitteln eine exaktere Erzeugung der Mündung eines Vorproduktes aus Glas, insbesondere zur Herstellung eines Glasfläschchens, ermöglicht wird.

In Bezug auf die Einrichtung wird die voranstehende Aufgabe durch die Merkmale des Anspruches 1 gelöst. Danach ist eine Einrichtung zur Formung einer Innenwandung der Mündung eines hohlkörperförmigen Vorproduktes aus Glas, insbesondere zur Herstellung eines pharmazeutischen Glasfläschchens, mit einem Dorn zum Einführen in die Mündung des Vorproduktes entlang einer ersten Richtung und einer Halterung, wobei der Dorn an der Halterung angeordnet ist, dadurch gekennzeichnet, dass die Halterung ein Grundelement aufweist und dass der Dorn gegenüber dem Grundelement entlang einer zweiten Richtung bewegbar ist.

Es ist erkannt worden, dass die zugrundeliegende Aufgabe auf besonders effiziente Weise gelöst werden kann, wenn der Dorn exakt gegenüber der Mündung des Vorproduktes und somit gegenüber dem das Vorprodukt haltenden Haltefutter ausgerichtet werden kann. Hierzu ist der Dorn gegenüber dem Grundelement beweglich ausgebildet, so dass eine exakte Ausrichtung des Dorns möglich ist, indem nämlich der Dorn beim Einführen in die Mündung des Vorproduktes in die gewünschte Position gedrückt bzw. geschoben wird. Somit wird eine Art schwimmende Lagerung des Dorns geschaffen, so dass eine selbstständige Ausrichtung des Dorns gegenüber dem Vorprodukt ermöglicht ist.

Der Ausdruck "hohlkörperförmiges Vorprodukt aus Glas" ist im Rahmen dieser Offenbarung dahingehend zu verstehen, dass es sich beispielsweise um ein Glasrohr handelt, aus dem eine pharmazeutische Primärverpackung, insbesondere ein pharmazeutisches Glasfläschchen herstellbar ist.

Der Ausdruck "pharmazeutisches Glasfläschchen" ist im Rahmen dieser Offenbarung dahingehend zu verstehen, dass es sich um eine pharmazeutische Primärverpackung aus Glas, beispielsweise ein Injektionsbehältnis oder ein Vial handelt, die insbesondere zur Aufbewahrung von Injektionspräparaten Verwendung finden.

Der Begriff "Mündung" beschreibt im Rahmen dieser Offenbarung das offene Ende des aus dem Vorprodukt hergestellten Endprodukts. Bei einem pharmazeutischen Glasfläschchen wird die Mündung auch als Rollrand oder Halsverschluss bezeichnet. Die Innenwandung der Mündung kann üblicherweise entweder eben ausgebildet sein, sog. "No Blow Back", oder einen Vorsprung bzw. eine Wulst aufweisen, sog. "European Blow Back", oder eine Nut aufweisen, sog "American Blow Back".

Der Ausdruck "Mehrzahl von pharmazeutischen Glasfläschchen" beschreibt im Rahmen dieser Offenbarung eine Verkaufs- oder Verpackungseinheit von pharmazeutischen Glasfläschchen. Diese werden beispielsweise durch Abstandshalter getrennt aufbewahrt oder sind in einer Halteeinrichtung, insbesondere einem Nest oder einem Tray angeordnet, so dass sie sich nicht berühren. Üblicherweise, jedoch nicht zwangsweise, ist die Mehrzahl von pharmazeutischen Glasfläschchen zumindest teilweise von einer Folie umgeben und gegebenenfalls sterilisiert. Eine solche Verpackungseinheit besteht aus 10 oder mehr Glasfläschchen, beispielsweise aus 10 bis 1000 Glasfläschchen, insbesondere 20 bis 500 Glasfläschchen, vorzugsweise 40 bis 250 Glasfläschchen. Beispiele für solche Verpackungseinheiten sind die iQ^{™} Plattformen der SCHOTT AG, das heißt die beispielsweise die gebrauchsfertige Plattform adapdtiQ^{®} der SCHOTT AG.

In vorteilhafter Weise kann der Dorn gegenüber dem Grundelement entlang einer dritten Richtung bewegbar sein. Indem der Dorn entlang dreier Richtungen gegenüber dem Grundelement bewegbar ist, kann sich dieser noch exakter gegenüber der Mündung des Vorproduktes ausrichten, wenn er in die Mündung eingeführt wird bzw. in dieser eingeführt ist. Somit werden äußerst geringe Toleranzen bei der Formung der Mündung erzielt.

In besonders vorteilhafter Weise können die erste Richtung, die zweite Richtung und die dritte Richtung jeweils senkrecht zueinander verlaufen. Somit ist eine Art schwimmende Lagerung realisiert und verlaufen die Bewegungsrichtungen analog zu einem kartesischen Koordinatensystem, so dass sich der Dorn auf besonders exakte Weise im Raum positionieren lässt.

Im Konkreten ist es denkbar, dass der Dorn 0.1 mm bis 1.0 mm, insbesondere 0.2 mm bis 0.8 mm, vorzugsweise 0.3 mm bis 0.7 mm, entlang der zweiten Richtung und/oder entlang der dritten Richtung gegenüber dem Grundelement bewegbar ist. Eine solche Ausgestaltung hat den Vorteil, dass sie einerseits mit relativ geringem maschinenbaulichem Aufwand realisiert werden kann und andererseits gewährleistet ist, dass der Dorn ausreichend "Spiel" hat, um die Toleranzen des Halterfutters auszugleichen.

Gemäß einer weiteren vorteilhaften Ausgestaltung kann die Halterung mindestens ein Ausgleichselement aufweisen, das mit dem Grundelement verbunden ist, wobei das Ausgleichselement entlang der zweiten Richtung und/oder entlang der dritten Richtung gegenüber dem Grundelement beweglich ist, wobei der Dorn, vorzugsweise unbeweglich, an dem Ausgleichselement angeordnet ist. Durch ein solches Ausgleichselement wird eine Führung und somit eine exakte Bewegung des Dorns realisiert.

In weiter vorteilhafter Weise können das Grundelement und/oder das Ausgleichselement mindestens einen Durchgang zur Aufnahme eines Verbindungselementes aufweisen, wobei der mindestens eine Durchgang derart dimensioniert ist, dass das Verbindungselement mit Spiel in dem Durchgang angeordnet ist, um eine Bewegung entlang der zweiten Richtung und/oder entlang der dritten Richtung zu ermöglichen. Diese konstruktive Maßnahme ermöglicht eine besonders einfache Verbindung und Führung zwischen dem Grundelement und dem Ausgleichselement, so dass beispielsweise ein Kippen des Dorns verhindert wird.

In besonders vorteilhafter Weise kann die Halterung ein erstes Ausgleichselement und ein zweites Ausgleichselement aufweisen, wobei das erste Ausgleichselement mit dem Grundelement verbunden ist und das zweite Ausgleichselement mit dem ersten Ausgleichselement verbunden ist, wobei das erste Ausgleichselement und/oder das zweite Ausgleichselement entlang der zweiten Richtung und/oder entlang der dritten Richtung gegenüber dem Grundelement beweglich ist und wobei der Dorn, vorzugsweise unbeweglich, an dem zweiten Ausgleichselement angeordnet ist. Die Anordnung von zwei Ausgleichselementen, wobei jeweils eines die Bewegung in eine Richtung ermöglicht, ist von Vorteil, da der Dorn durch diese äußerst exakt entlang der zweiten und der dritten Richtung geführt wird. Insbesondere bei der Formung der Mündung des Vorproduktes, wenn somit äußere Kräfte auf den Dorn wirken, ist wirksam vermieden, dass der Dorn kippt. Dies führt zu einer erheblichen Verbesserung der Toleranzen des beispielsweise damit erzeugten pharmazeutischen Glasfläschchens.

Zur Realisierung einer einfachen Verbindung, die gleichzeitig eine exakte Bewegungsführung des Dorns ermöglicht, kann das Grundelement und/oder das erste Ausgleichselement und/oder das zweite Ausgleichselement mindestens einen Durchgang zur Aufnahme eines Verbindungselementes aufweisen, wobei der Durchgang derart dimensioniert ist, dass das Verbindungselement mit Spiel in dem Durchgang angeordnet ist, um eine Bewegung entlang der zweiten Richtung und/oder entlang der dritten Richtung zu ermöglichen.

Gemäß einer vorteilhaften Ausgestaltung kann das Verbindungselement als Bolzen ausgebildet sein. Durch eine solche Konstruktion ist eine einfache und zuverlässige Verbindung realisierbar.

In vorteilhafter Weise kann das Grundelement als Grundplatte ausgebildet sein und/oder kann das mindestens eine Ausgleichselement als Ausgleichsplatte ausgebildet sein. Eine plattenförmige Ausgestaltung hat den Vorteil, dass auf einer relativ großen Fläche eine Verbindung zwischen den verschiedenen Elementen erzeugt wird, die ein Kippen des Dorns verhindert.

In besonders vorteilhafter Weise kann der Dorn als Spreizdorn ausgebildet sein. Mit einem Spreizdorn kann beispielsweise ein "European Blow Back" und/oder ein "American Blow Back" erzeugt werden. Alternativ ist es denkbar, dass der Dorn zur Herstellung einer Mündung ohne "Blow Back" dient, beispielsweise einteilig bzw. ohne bewegliche Elemente ausgebildet ist.

Des Weiteren wird die zugrundeliegende Aufgabe durch eine Vorrichtung gemäß Anspruch 11 gelöst. Danach ist eine Vorrichtung zur Bearbeitung eines hohlkörperförmigen Vorproduktes aus Glas, insbesondere zur Herstellung eines pharmazeutischen Glasfläschchens, mit mindestens einem Haltefutter zum Einspannen des Vorproduktes, einer Erhitzungseinrichtung und einer Außenformeinrichtung zur Formung einer Außenwandung der Mündung des Vorproduktes, dadurch gekennzeichnet, dass eine Einrichtung nach einem der Ansprüche 1 bis 10 angeordnet ist.

Eine solche Vorrichtung hat den Vorteil, dass eine exakte Bearbeitung des Vorproduktes durchführbar ist, nämlich eine Mündung mit äußerst geringen Toleranzen hergestellt werden kann.

Gemäß einer vorteilhaften Ausgestaltung kann ein drehbarer Maschinenteller mit mehreren Haltefuttern angeordnet sein und können die Haltefutter jeweils drehbar ausgebildet sein. Dies hat den Vorteil, dass eine indexierte Bewegung der zur bearbeitenden Vorprodukte möglich ist. Alternativ oder zusätzlich kann die Außenformeinrichtung zwei bewegliche Formrollen aufweisen. Somit kann auf einfache Weise die Außenwandung der Mündung der Vorprodukte bearbeitet bzw. geformt werden. In vorteilhafter Weise können die Formrollen in Richtung der Außenwandung des Vorproduktes mit eine Kraft beaufschlagbar sein.

Die zugrundeliegende Aufgabe wird des Weiteren gelöst durch ein Verfahren zur Formung der Mündung eines hohlkörperförmigen Vorproduktes aus Glas, insbesondere zur Herstellung eines pharmazeutischen Glasfläschchens, mit einer Einrichtung nach einem der Ansprüche 1 bis 10, umfassend die folgenden Verfahrensschritte:
- Erhitzen zumindest der Mündung des Vorproduktes,
- Einführend des Dorns in die Mündung des Vorproduktes und Andrücken von Formrollen von außen an die Mündung des sich drehenden Vorproduktes.

Ein entsprechendes Verfahren zeichnet sich dadurch aus, dass in relativ kurzer Zeit und mit geringem apparativen Aufwand Vorprodukte bearbeitet werden können, die eine besonders exakt geformte Mündung aufweisen.

Weiterhin betrifft die Erfindung eine Mehrzahl von pharmazeutischen Glasfläschchen, insbesondere hergestellt unter Verwendung einer Einrichtung nach einem der Ansprüche 1 bis 10 und/oder unter Verwendung einer Vorrichtung nach einem der Ansprüche 11 bis 12 und/oder unter Verwendung eines Verfahrens nach Anspruch 16, mit mindestens 10 Glasfläschchen, beispielsweise 10 bis 1000 Glasfläschchen, insbesondere 20 bis 500 Glasfläschchen, vorzugsweise 40 bis 250 Glasfläschchen, wobei ein Mündungsinnendurchmesser der Mündung eines jeden Glasfläschchens weniger als 0.20 mm, insbesondere weniger als 0.15 mm, vorzugsweise weniger als 0.1 mm, besonders bevorzugt weniger als 0.05 mm, von einem Innendurchmesser-Sollwert abweicht und/oder wobei ein Mündungsaußendurchmesser der Mündung eines jeden Glasfläschchens weniger als 0.20 mm, insbesondere weniger als 0.15 mm, vorzugsweise weniger als 0.10 mm, besonders bevorzugt weniger als 0.05 mm, von einem Außendurchmesser-Sollwert abweicht.

Eine solche Mehrzahl von pharmazeutischen Glasfläschchens weist den Vorteil auf, dass diese strengste Qualitätsstandards erfüllen, was insbesondere durch die Verwendung einer beschriebenen Einrichtung und/oder durch die Verwendung einer beschriebenen Vorrichtung und/oder durch die Verwendung eines beschriebenen Verfahrens realisierbar ist.

In vorteilhafter Weise kann der Innendurchmesser-Sollwert 7 mm oder 12.6 mm betragen und/oder kann der Außendurchmesser-Sollwert 13 mm oder 20 mm betragen.

Die vorliegende Offenbarung betrifft des Weiteren eine Vorrichtung zur Bearbeitung eines hohlkörperförmigen Vorproduktes aus Glas, insbesondere zu Herstellung eines pharmazeutischen Glasfläschchens, mit mindestens einem Haltefutter zum Einspannen des Vorproduktes, einer Erhitzungseinrichtung und einer Außenformeinrichtung zur Formung einer Außenwandung der Mündung des Vorproduktes, und einer Einrichtung zur Formung einer Innenwandung der Mündung eines hohlkörperförmigen Vorproduktes aus Glas, insbesondere nach einem der Ansprüche 1 bis 11, mit einem Dorn zum Einführen in die Mündung des Vorproduktes entlang einer ersten Richtung und einer Halterung, wobei der Dorn an der Halterung angeordnet ist, wobei die Vorrichtung dazu ausgebildet ist, eine Mündung eines pharmazeutischen Glasfläschchen zu erzeugen, mit einem Mündungsinnendurchmesser der Mündung, der weniger als 0.20 mm, insbesondere weniger als 0.15 mm, vorzugsweise weniger als 0.1 mm, besonders bevorzugt weniger als 0.05 mm, von einem Innendurchmesser-Sollwert abweicht und/oder wobei ein Mündungsaußendurchmesser der Mündung eines jeden Glasfläschchens weniger als 0.20 mm, insbesondere weniger als 0.15 mm, vorzugsweise weniger als 0.10 mm, besonders bevorzugt weniger als 0.05 mm, von einem Außendurchmesser-Sollwert abweicht

Es gibt nun verschiedene Möglichkeiten, die Lehre der vorliegenden Erfindung in vorteilhafter Weise auszugestalten und weiterzubilden. Dazu ist einerseits auf die dem Anspruch 1 nachgeordneten Ansprüche und andererseits auf die nachfolgende Erläuterung bevorzugter Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen
- Fig. 1a: in einer schematischen, teilweise geschnittenen Seitenansicht einen Teil eines pharmazeutischen Glasfläschchens,
- Fig. 1b: in einer schematischen, teilweise geschnittenen Seitenansicht einen vergrößerten Ausschnitt des pharmazeutischen Glasfläschchens aus Fig. 1a,
- Fig. 2a: in einer schematischen, teilweise geschnittenen Seitenansicht einen Teil eines weiteren pharmazeutischen Glasfläschchens,
- Fig. 2b: in einer schematischen, teilweise geschnittenen Seitenansicht einen vergrößerten Ausschnitt des pharmazeutischen Glasfläschchens aus Fig. 2a,
- Fig. 3a: in einer schematischen Darstellung einen Teil einer Vorrichtung zur Bearbeitung eines hohlkörperförmigen Vorproduktes in einer ersten Arbeitsstellung,
- Fig. 3b: in einer schematischen Darstellung einen Teil einer Vorrichtung zur Bearbeitung eines hohlkörperförmigen Vorproduktes in einer weiteren Arbeitsstellung,
- Fig. 4: in einer schematischen Darstellung eine geschnittene Seitenansicht eines Ausführungsbeispiels einer erfindungsgemäßen Einrichtung,
- Fig. 5: in einer schematischen Darstellung eine geschnittene Seitenansicht eines weiteren Ausführungsbeispiels einer erfindungsgemäßen Einrichtung,
- Fig. 6a: in einer schematischen Darstellung eine Aufsicht auf einen Teil einer Einrichtung gemäß Fig. 5 in einer ersten Position,

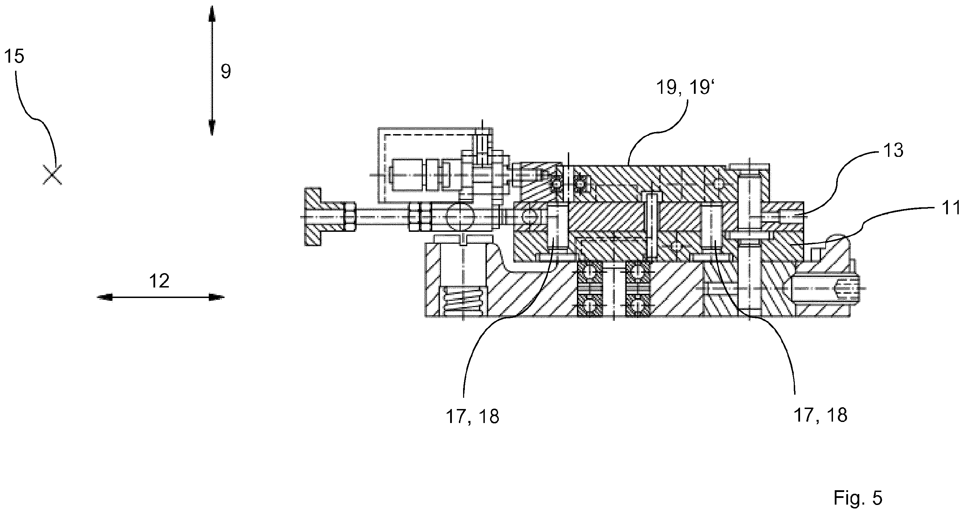

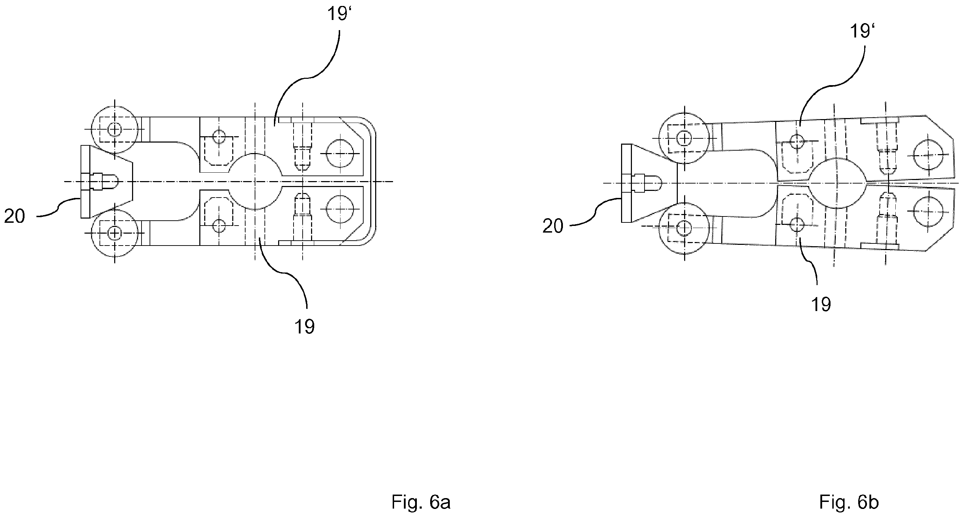

- Fig. 6a: in einer schematischen Darstellung eine Aufsicht auf einen Teil einer Einrichtung gemäß Fig. 5 in einer weiteren Position,

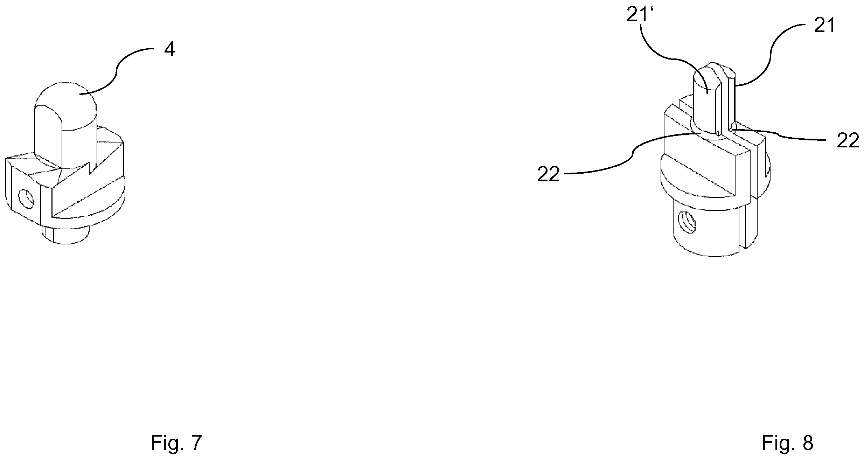

- Fig. 7: in einer schematischen Darstellung eine perspektivische Ansicht eines Dorns,
- Fig. 8: in einer schematischen Darstellung eine perspektivische Ansicht eines weiteren Dorns,

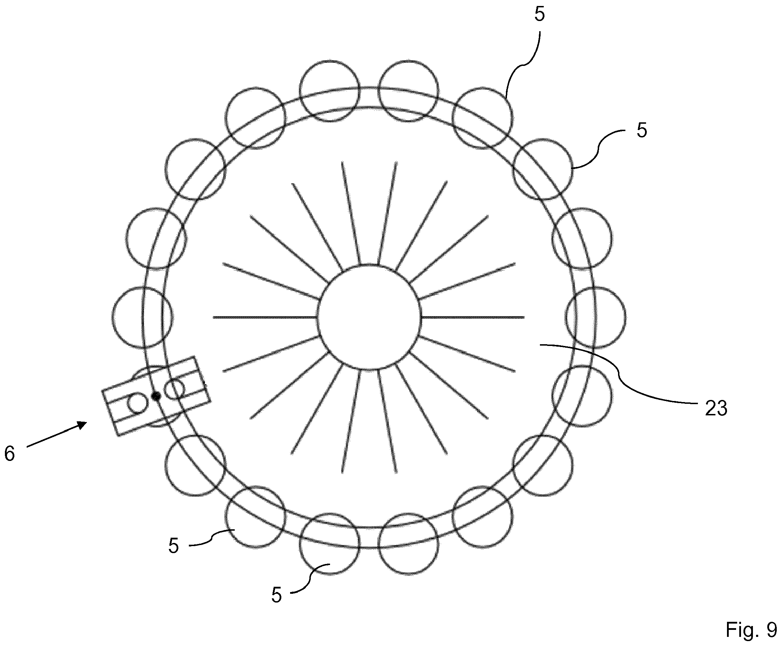

- Fig. 9: in einer schematischen Darstellung eine Aufsicht auf ein Ausführungsbeispiel einer erfindungsgemäßen Vorrichtung,

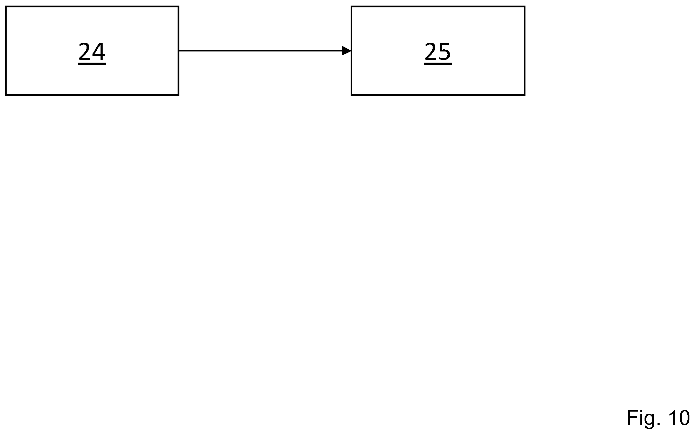

- Fig. 10: ein Blockbild zur Verdeutlichung einer Ausführungsform eines erfindungsgemäßen Verfahrens.

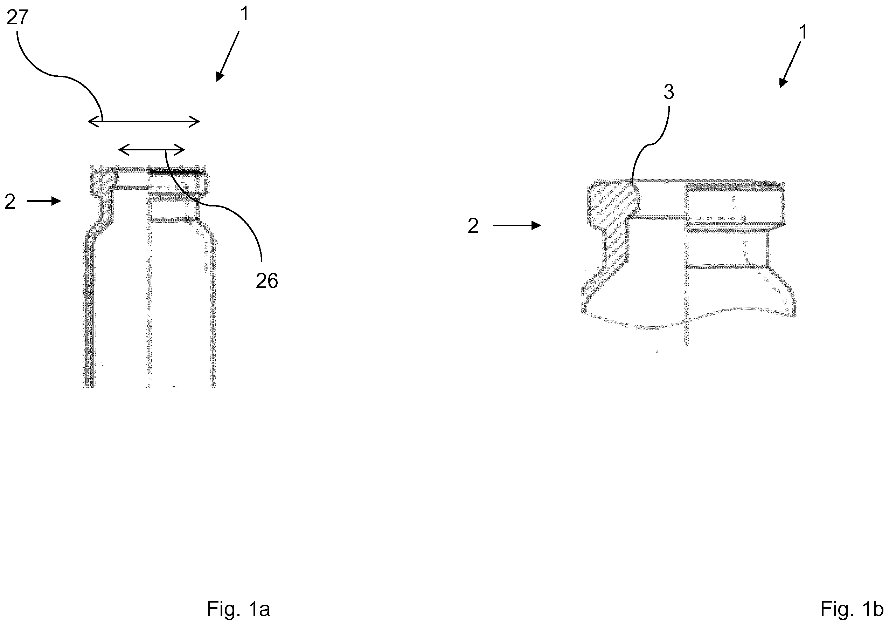

In den Fig. 1a bis 2b sind pharmazeutische Glasfläschchen 1 dargestellt, deren Mündung 2 unter Verwendung der erfindungsgemäßen Lehre hergestellt werden können.

Die Fig. 1a und 1b zeigen ein Ausführungsbeispiel eines pharmazeutischen Glasfläschchens 1 dessen Mündung 2 an der Innenwandung eine sich in Radialrichtung erstreckende umlaufende Wulst 3 aufweist. Somit handelt es sich um eine Mündung 2 mit einem sog. "European Blow Back".

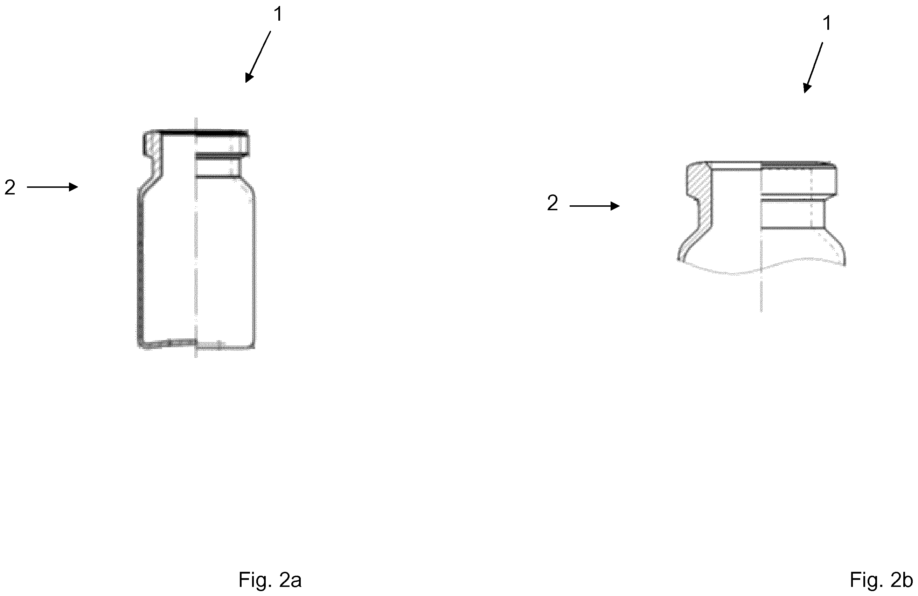

Die Fig. 2a und 2b zeigen ein weiteres Ausführungsbeispiel eines pharmazeutischen Glasfläschchens 1 dessen Mündung 2 an der Innenwandung eben ausgebildet ist. Somit handelt es sich um eine Mündung 2 mit einem sog. "No Blow Back".

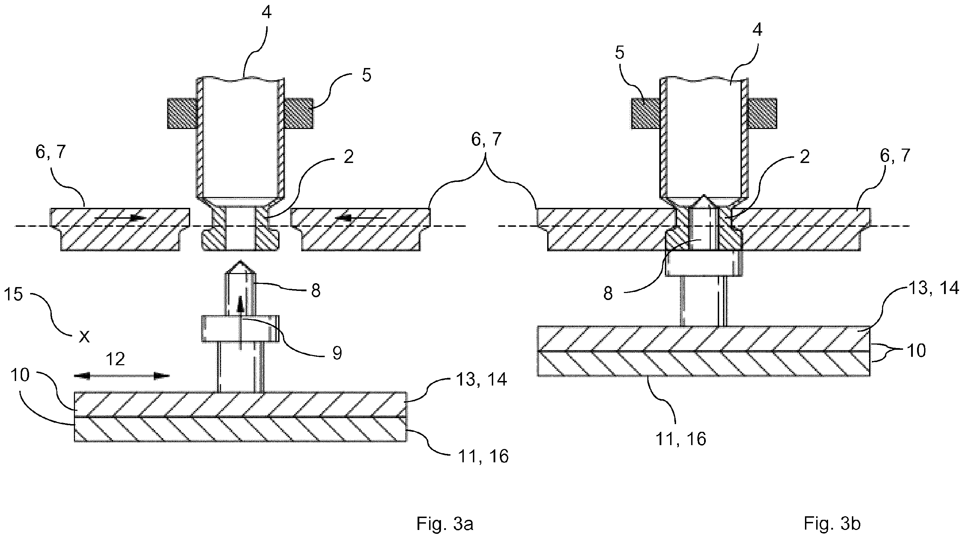

In den Fig. 3a und 3b ist eine Vorrichtung zur Bearbeitung eines hohlkörperförmigen Vorproduktes 4 aus Glas dargestellt. Die Vorrichtung weist ein Haltefutter 5 zum Einspannen des Vorproduktes 4 auf. Zur Formung der Mündung 2 des Vorproduktes 4 wird dieses über eine nicht dargestellte Erhitzungseinrichtung auf die benötigte Temperatur erhitzt. Des Weiteren ist eine Außenformeinrichtung 6 dargestellt, die zwei Formrollen 7 aufweist. Die Formrollen 7 sind jeweils entlang ihrer Pfeile auf das Vorprodukt 4 hin bewegbar.

Des Weiteren ist ein Dorn 8 zum Einführen in die Mündung 2 entlang einer ersten Richtung 9 angeordnet. Der Durchmesser des Dorns 8 entspricht dem Mündungsinnendurchmesser 26 der zu erzeugenden Mündung 4. Durch die Formrollen 7, die von außen zum Vorprodukt 4 bewegt werden, wird das im Mündungsbereich aufgewärmte, weiche Vorprodukt 4 beispielsweise über Federkraft zum Dorn 8 gedrückt. Dabei rotiert das Vorprodukt 4 durch das angetriebene Haltefutter 5, so dass der Mündungsinnendurchmesser entsteht.

Zudem ist zu erkennen, dass der Dorn 8 an einer Halterung 10 angeordnet ist. Die Halterung 10 weist ein Grundelement 11 und ein damit entlang einer zweiten Richtung 12 bewegbares Ausgleichselement 13 auf. An dem als Ausgleichsplatte 14 ausgebildeten Ausgleichselement 13 ist der Dorn 8 fest angeordnet. Somit wird der Dorn 8 gemeinsam mit dem Ausgleichselement 13 beim Einführen in die Mündung 2 bzw. durch die Kraft der Formrollen 7 in eine optimale Ausrichtung entlang der zweiten Richtung 12 verbracht bzw. verschoben. Dabei ist es des Weiteren denkbar, dass das Ausgleichselement 13 oder gegebenenfalls ein weiteres Ausgleichselement gegenüber dem Grundelement 11 auch entlang einer dritten Richtung 15, die im hier dargestellten Ausführungsbeispiel durch ein "x" gekennzeichnet ist und senkrecht zur Zeichenebene der Fig. 3a und 3b verläuft, bewegbar ist. Somit kann der Dorn 8 noch exakter gegenüber der Mündung 2 ausgerichtet werden. Im hier dargestellten Ausführungsbeispiel ist das Grundelement 11 als Grundplatte 16 ausgebildet.

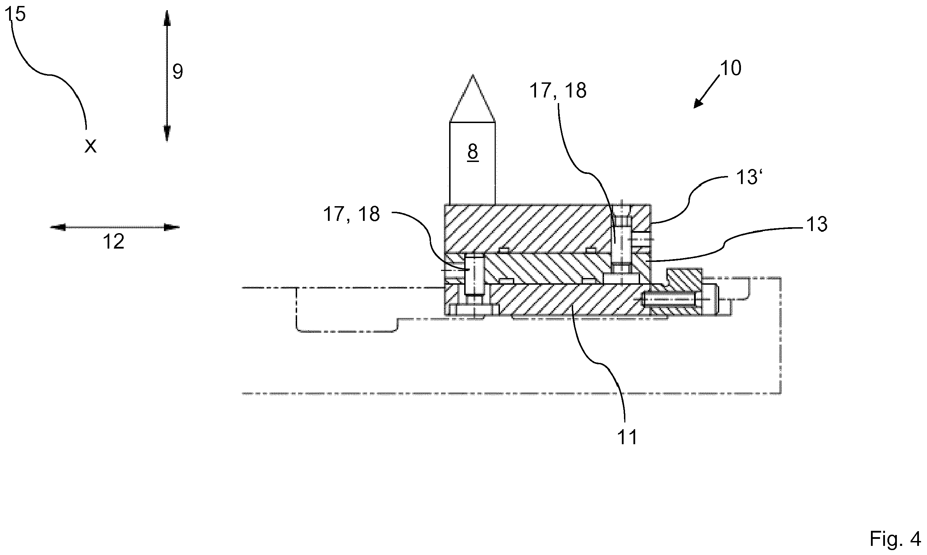

Fig. 4 zeigt in einer schematischen Darstellung eine geschnittene Seitenansicht eines Ausführungsbeispiels einer erfindungsgemäßen Einrichtung. Die Einrichtung weist einen Dorn 8 auf, der zum Einführen in die Mündung eines nicht dargestellten Vorproduktes entlang einer ersten Richtung 9 dient. Der Dorn 8 ist an einer Halterung 10 angeordnet. Die Halterung 10 weist ein Grundelement 11, ein erstes Ausgleichselement 13 und ein zweites Ausgleichselement 13' auf. Das erste Ausgleichselement 13 ist gegenüber dem Grundelement 11 entlang einer zweiten Richtung 12 bewegbar und das zweite Ausgleichselement 13' ist gegenüber dem Grundelement 11 entlang einer dritten Richtung 15 bewegbar. Die durch das "x" markierten dritte Richtung 15 verläuft dabei senkrecht zur Zeichenebene.

Das Grundelement 11 und die Ausgleichselemente 13, 13' weisen jeweils Durchgänge 17 auf, in welchen als Bolzen realisierte Verbindungselemente 18 angeordnet sind. Die Durchgänge 17 sind dabei derart dimensioniert, dass die Ausgleichselemente 13, 13' entlang der zweiten Richtung 12 bzw. entlang der dritten Richtung 15 bewegbar sind.

Fig. 5 zeigt ein weiteres Ausführungsbeispiel einer Einrichtung zur Formung der Innenwandung der Mündung eines hohlkörperförmigen Vorproduktes. Die Einrichtung umfasst eine Halterung 10 mit einem Grundelement 11 und einem gegenüber dem Grundelement 11 beweglichen Ausgleichselement 13. Die Grundplatte 11 und das Ausgleichselement 13 sind über als Bolzen realisierte Verbindungselemente 18 miteinander verbunden, wobei die die Bolzen aufnehmenden Durchgänge 17 derart ausgebildet sind, dass das Ausgleichselement 13 in die zweite Richtung 12 und in die dritte Richtung 15 gegenüber dem Grundelement 11 bewegbar ist. Der nicht dargestellte Dorn der Einrichtung ist als Spreizdorn ausgebildet, der über zwei Spreizarme 19, 19' betätigbar ist. Hierzu ist ein bewegliches Konuselement 20 angeordnet, das die vorgespannten Spreizarme 19, 19' betätigt, die jeweils ein Element des Spreizdorns tragen.

In den Fig. 6a und 6b sind das Konuselement 20 sowie die Spreizarrme 19, 19' gezeigt. Fig. 6a zeigt dabei die Arbeitsstellung, bei der das Konuselement 20 in Richtung der Spreizarme 19, 19' bewegt worden ist, so dass die Elemente des Spreizdorns derart auseinanderbewegt werden, dass das Maß des gewünschten Mündungsdurchmessers erreicht ist. Fig. 6b zeigt die Ruheposition, in der die Spreizarme 19, 19' und somit die Elemente des Spreizdorns enger aneinander liegen, so dass der Spreizdorn aus der geformten Mündung herausgezogen werden kann.

Fig. 7 zeigt in einer schematischen Darstellung eine perspektivische Ansicht eines Dorns 4. Der Dorn 4 ist dabei einteilig ausgebildet und dient zur Erzeugung einer "No Blow Back" Mündung.

Fig. 8 zeigt in einer schematischen Darstellung eine perspektivische Ansicht eines Dorns 4, der als Spreizdorn ausgebildet ist. Der Dorn 4 umfasst zwei Elemente 21, 21', die jeweils eine Nut 22 aufweisen, so dass eine Mündung mit einem "European Blow Back" geformt werden kann.

Fig. 9 zeigt in einer schematischen Darstellung eine Aufsicht auf ein Ausführungsbeispiel einer erfindungsgemäßen Vorrichtung. Diese weist einen Maschinenteller 23 mit mehreren Haltefuttern 5 zur Aufnahme eines Vorproduktes, eine Erhitzungseinrichtung und eine Außenformeinrichtung 6 auf. Unterhalb der Außenformeinrichtung 6 und somit nicht sichtbar ist eine erfindungsgemäße Einrichtung zur Formung einer Innenwandung der Mündung eines Hohlproduktes angeordnet. Der Maschinenteller 23 mit den Haltefuttern 5 indexiert in einer Drehbewegung von einer Bearbeitungsstation zur nächsten. Für die Bearbeitung bleibt der Maschinenteller 23 mit den Haltefuttern 5 für eine definierte Zeitspanne stehen. Insgesamt sind in diesem Beispiel 18 Bearbeitungsstationen vorhanden. Jedes dieser Haltefutter 5 wird durch das Indexieren des Maschinentellers 23 immer wieder an einer Bearbeitungsstation vorbeigeführt, so auch an der dargestellten Einrichtung zur Formung einer Innenwandung der Mündung eines Hohlproduktes. Der Teilkreisdurchmesser der Haltefutter 5 auf dem Teller kann beispielsweise zwischen 100 und 200 cm liegen, abhängig von dem jeweiligen Maschinentyp.

Fig. 10 zeigt ein Blockdiagramm zur Darstellung eines Ausführungsbeispiels des erfindungsgemäßen Verfahrens. Dabei wird in einem ersten Schritt 24 zumindest die Mündung des Vorproduktes erhitzt, so dass diese ausreichend erweicht, um geformt zu werden. In einem nächsten Schritt 24 wird sodann der Dorn einer erfindungsgemäßen Einrichtung in die Mündung des sich drehenden Vorproduktes eingeführt und werden die Formrollen von außen an die Mündung angedrückt.

An dieser Stelle wird darauf hingewiesen, dass vor, zwischen oder nach dem ersten Schritt 24 und dem zweiten Schritt 25 weitere Verfahrensschritte durchgeführt werden können.

In der nachstehenden Tabelle sind die Abweichungen des Mündungsinnendurchmessers 26 und des Mündungsaußendurchmesser 27 (vgl. Fig. 1a) von dem jeweiligen Sollwert angegeben jeweils unter Verwendung einer erfindungsgemäßen Einrichtung und unter Verwendung eines herkömmlichen, lediglich in die erste Richtung beweglichen Dorns.

| | Abweichung vom Sollwert bei herkömmlicher Einrichtung | Abweichung vom Sollwert bei erfindungsgemäßer Einrichtung |
|---|---|---|
| Mündungsinnendurchmesser | ± 0.2 mm | ± 0.05 mm |
| Mündungsaußendurchmesser | ± 0.25 mm | ± 0.01 mm |

Aus der Tabelle geht eindeutig hervor, dass es insbesondere bei diesen Durchmessern zu einer deutlich stabileren Produktion kommt, wobei auch die weiteren Mündungsmaße stabiler werden, da die Mündung besser ausgeformt wird, was zu geringeren Operator Eingriffen führt.

Hinsichtlich weiterer vorteilhafter Ausgestaltungen der erfindungsgemäßen Lehre wird zur Vermeidung von Wiederholungen auf den allgemeinen Teil der Beschreibung sowie auf die beigefügten Ansprüche verwiesen.

Schließlich sei ausdrücklich darauf hingewiesen, dass die voranstehend beschriebenen Ausführungsbeispiele der erfindungsgemäßen Gegenstände lediglich zur Erörterung der beanspruchten Lehre dienen, diese jedoch nicht auf die Ausführungsbeispiele einschränken.

### Bezugszeichenliste

- 1: Glasfläschchen
- 2: Mündung
- 3: Wulst
- 4: Vorprodukt
- 5: Haltefutter
- 6: Außenformeinrichtung
- 7: Formrolle
- 8: Dorn
- 9: erste Richtung
- 10: Halterung
- 11: Grundelement
- 12: zweite Richtung
- 13, 13': Ausgleichselement
- 14: Ausgleichsplatte
- 15: dritte Richtung
- 16: Grundplatte
- 17: Durchgang
- 18: Verbindungselement
- 19, 19': Spreizarm
- 20: Konuselement
- 21, 21': Element (Spreizdorn)
- 22: Nut
- 23: Maschinenteller
- 24: erster Schritt
- 25: zweiter Schritt
- 26: Mündungsinnendurchmesser
- 27: Mündungsaußendurchmesser

## Patentansprüche

1. Einrichtung zur Formung einer Innenwandung der Mündung (2) eines hohlkörperförmigen Vorproduktes (4) aus Glas, insbesondere zur Herstellung eines pharmazeutischen Glasfläschchens (1), mit einem Dorn (8) zum Einführen in die Mündung (2) des Vorproduktes (4) entlang einer ersten Richtung (9) und einer Halterung (10), wobei der Dorn (8) an der Halterung (10) angeordnet ist,
**dadurch gekennzeichnet, dass** die Halterung (10) ein Grundelement (11) aufweist und dass der Dorn (8) gegenüber dem Grundelement (11) entlang einer zweiten Richtung (12) bewegbar ist.

2. Einrichtung nach Anspruch 1, **dadurch gekennzeichnet, dass** der Dorn (8) gegenüber dem Grundelement (11) entlang einer dritten Richtung (15) bewegbar ist.

3. Einrichtung nach Anspruch 1 oder 2, **dadurch gekennzeichnet, dass** die erste Richtung (9) und die zweite Richtung (12) oder die dritte Richtung (15) jeweils senkrecht zueinander verlaufen, oder dass die erste Richtung (9) und die zweite Richtung (12) und die dritte Richtung (15) jeweils senkrecht zueinander verlaufen.

4. Einrichtung nach einem der Ansprüche 1 bis 3, **dadurch gekennzeichnet, dass** der Dorn (8) 0.1 mm bis 1.0 mm, insbesondere 0.2 mm bis 0.8 mm, vorzugsweise 0.3 bis 0.7 mm, entlang der zweiten Richtung (12) und/oder entlang der dritten Richtung (15) gegenüber dem Grundelement (11) bewegbar ist.

5. Einrichtung nach einem der Ansprüche 1 bis 4, **dadurch gekennzeichnet, dass** die Halterung (10) mindestens ein Ausgleichselement (13, 13') aufweist, das mit dem Grundelement (11) verbunden ist, wobei das Ausgleichselement (13, 13') entlang der zweiten Richtung (12) und/oder entlang der dritten Richtung (15) gegenüber dem Grundelement (11) beweglich ist, wobei der Dorn (8), vorzugsweise unbeweglich, an dem Ausgleichselement (13, 13') angeordnet ist.

6. Einrichtung nach einem der Ansprüche 1 bis 5, **dadurch gekennzeichnet, dass** das Grundelement (11) und/oder das Ausgleichselement (13, 13') mindestens einen Durchgang (17) zur Aufnahme eines Verbindungselementes (18) aufweisen, und wobei der mindestens eine Durchgang (17) derart dimensioniert ist, dass das Verbindungselement (18) mit Spiel in dem Durchgang (17) angeordnet ist, um eine Bewegung entlang der zweiten Richtung (12) und/oder entlang der dritten Richtung (15) zu ermöglichen.

7. Einrichtung nach einem der Ansprüche 1 bis 6, **dadurch gekennzeichnet, dass** die Halterung (10) ein erstes Ausgleichselement (13, 13') und ein zweites Ausgleichselement (13, 13') aufweist, wobei das erste Ausgleichselement (13, 13') mit dem Grundelement (11) verbunden ist und das zweite Ausgleichselement (13, 13') mit dem ersten Ausgleichselement (13, 13') verbunden ist, wobei das erste Ausgleichselement (13, 13') und/oder das zweite Ausgleichselement (13, 13') entlang der zweiten Richtung (12) und/oder entlang der dritten Richtung (15) gegenüber dem Grundelement (11) beweglich ist und wobei der Dorn (8), vorzugsweise unbeweglich, an dem zweiten Ausgleichselement (13, 13') angeordnet ist.

8. Einrichtung nach Anspruch 7, **dadurch gekennzeichnet, dass** das Grundelement (11) und/oder das erste Ausgleichselement (13, 13') und/oder das zweite Ausgleichselement (13, 13') mindestens einen Durchgang (17) zur Aufnahme eines Verbindungselementes (18) aufweisen, und dass der Durchgang (17) derart dimensioniert ist, dass das Verbindungselement (18) mit Spiel in dem Durchgang (17) angeordnet ist, um eine Bewegung entlang der zweiten Richtung (12) und/oder entlang der dritten Richtung (15) zu ermöglichen.

9. Einrichtung nach einem der Ansprüche 6 bis 8, **dadurch gekennzeichnet, dass** das Verbindungselement (18) als Bolzen ausgebildet ist.

10. Einrichtung nach einem der Ansprüche 1 bis 9, **dadurch gekennzeichnet, dass** das Grundelement (11) als Grundplatte (16) ausgebildet ist, und/oder
dass das mindestens eine Ausgleichselement (13, 13') als Ausgleichsplatte (14) ausgebildet ist, und/oder
dass der Dorn (8) als Spreizdorn ausgebildet ist.

11. Vorrichtung zur Bearbeitung eines hohlkörperförmigen Vorproduktes (4) aus Glas, insbesondere zur Herstellung eines pharmazeutischen Glasfläschchens (1), mit mindestens einem Haltefutter (5) zum Einspannen des Vorproduktes (4), einer Erhitzungseinrichtung und einer Außenformeinrichtung zur Formung einer Außenwandung der Mündung (2) des Vorproduktes (4),
**dadurch gekennzeichnet, dass** eine Einrichtung nach einem der Ansprüche 1 bis 10 angeordnet ist.

12. Vorrichtung nach Anspruch 11, **dadurch gekennzeichnet, dass** ein drehbarer Maschinenteller (23) mit mehreren Haltefuttern (5) angeordnet ist und dass die Haltefutter (5) jeweils drehbar ausgebildet sind, und/oder
dass die Außenformeinrichtung (6) zwei bewegliche Formrollen (7) aufweist, und/oder dass die Formrollen (7) in Richtung der Außenwandung des Vorproduktes (4) mit einer Kraft beaufschlagbar sind.

13. Verfahren zur Formung der Mündung eines hohlkörperförmigen Vorproduktes (4) aus Glas, insbesondere zur Herstellung eines pharmazeutischen Glasfläschchens (1), mit einer Einrichtung nach einem der Ansprüche 1 bis 10, umfassend die folgenden Verfahrensschritte:
- Erhitzen zumindest der Mündung (2) des Vorproduktes (4),
- Einführen des Dorns (8) in die Mündung (2) des Vorproduktes (4) und Andrücken von Formrollen (7) von außen an die Mündung (2) des sich drehenden Vorproduktes (4).

14. Mehrzahl von pharmazeutischen Glasfläschchen (1), insbesondere hergestellt unter Verwendung einer Einrichtung nach einem der Ansprüche 1 bis 10 und/oder unter Verwendung einer Vorrichtung nach einem der Ansprüche 11 bis 12 und/oder unter Verwendung eines Verfahrens nach Anspruch 16, mit mindestens 10 Glasfläschchen (1), beispielsweise 10 bis 1000 Glasfläschchen (1), insbesondere 20 bis 500 Glasfläschchen (1), vorzugsweise 40 bis 250 Glasfläschchen (1), wobei ein Mündungsinnendurchmesser (26) der Mündung (2) eines jeden Glasfläschchens (1) weniger als 0.20 mm, insbesondere weniger als 0.15 mm, vorzugsweise weniger als 0.1 mm, besonders bevorzugt weniger als 0.05 mm, von einem Innendurchmesser-Sollwert abweicht und/oder wobei ein Mündungsaußendurchmesser (27) der Mündung (2) eines jeden Glasfläschchens (1) weniger als 0.20 mm, insbesondere weniger als 0.15 mm, vorzugsweise weniger als 0.10 mm, besonders bevorzugt weniger als 0.05 mm, von einem Außendurchmesser-Sollwert abweicht.

15. Mehrzahl von pharmazeutischen Glasfläschchen (1) nach Anspruch 14, **dadurch gekennzeichnet, dass** der Innendurchmesser-Sollwert 7 mm oder 12.6 mm beträgt und/oder dass der Außendurchmesser-Sollwert 13 mm oder 20 mm beträgt.
